# EUROPEAN PATENT SPECIFICATION

(11) **EP 4 603 053 B1**
(45) Date of publication and mention of the grant of the patent: **12.08.2026**
(21) Application number: 25156805.1
(22) Date of filing: 10.02.2025
(51) Int. Cl.: A61C 7/08, A61C 8/00

(54) **ORTHODONTIC DEVICE AND RELATED MANUFACTURING METHOD**
ORTHODONTISCHE VORRICHTUNG UND ZUGEHÖRIGES HERSTELLUNGSVERFAHREN
DISPOSITIF ORTHODONTIQUE ET PROCÉDÉ DE FABRICATION ASSOCIÉ

(30) Priority: 13.02.2024 IT 202400003049
(43) Date of publication of application: 20.08.2025
(73) Proprietor: Università degli Studi di Foggia, 71122 Foggia (IT)
(72) Inventor: LO MUZIO, Lorenzo, 71121 Foggia (IT); BATTISTA, Giovanni, 71121 Foggia (IT); CAMPOBASSO, Alessandra, 70121 Bari (IT)
(74) Representative: Leone, Mario

(56) References cited:
- WO-A1-2023/034160
- US-A1- 2016 278 882
- US-A1- 2024 016 581

## Description

The present invention relates to an orthodontic device and to the method for manufacturing the same, particularly a removable orthodontic device with an automatic pressure connection mechanism.

In particular, the invention relates to a removable orthodontic device, such as for example transparent aligners, functional orthodontic devices, restraint devices, etc., comprising a pressure automatic connection mechanism which allows to obtain complex orthodontic movements, but at the same time it makes easy to apply and to remove the device, it improves the aesthetics thereof and decreases the risk of allergies due to the contact with metal elements.

Moreover, the invention relates to a method for manufacturing a removable orthodontic device, which provides to produce said orthodontic device with CAD-CAM (Computer-Aided-Design/Computer-Aided-Manufacturing) techniques through 3D printing.

The removable orthodontic devices are removable orthodontic appliances which, by way of example, move incrementally and gradually the teeth and their skeletal bases towards their ideal position. In case of dental shifting, the programming of the movements that each single tooth has to reach is planned through CAD software allowing to perform individualized movements, by allowing a pre-display of the final result.

Over the last years, the treatment with removable orthodontic devices has widely spread among the clinicians and patients, thanks to its several advantages with respect to the traditional fixed therapy (orthodontic brackets, fixed apparatuses, metal wires). Beyond from being aesthetically not very visible and not very invasive, the removable appliances are devices which can be removed during meals and the oral hygiene manoeuvres, by improving the home hygiene and the periodontal health, resulting to be comfortable and well accepted by patients.

Despite the treatment with removable orthodontic devices has demonstrated to be effective for a wide range of malocclusions, the current scientific literature shows that the complex dental movements (body movement, radicular torque, intrusions, etc.) do not succeed in being obtained exclusively with these apparatuses, by requiring additional force systems during treatment.

Several scientific studies have demonstrated that the use of temporary anchorage devices (TADs), in particular orthodontic miniscrews in association to the removable orthodontic devices, may represent an ideal solution to overcome the biomechanical limits of such devices.

The orthodontic miniscrews are skeletal anchorage devices allowing to maximize the wished dental movements (action forces) and to minimize the unwished ones (reaction forces). The introduction of these devices has allowed to improve the correction of more severe malocclusions than those which can be treated with the traditional orthodontic mechanics. In fact, since they are anchored skeletally, the miniscrews allow an application of the orthodontic force by limiting the adverse and uncontrolled effects on the teeth.

The use of the miniscrews has several clinical indications, thereamong distalizations and mesializations of the dental arches, expansions of the palate, extrusions or intrusions or single or groups of teeth, retraction or protrusion of the frontal group, straightening of the molars, in case of insufficient dental anchorage or in the orthopedic treatments in patients in the growth phase.

Up to now, the connection between miniscrews and removable orthodontic devices has already occurred by using fixed metal auxiliary apparatuses (expanders, distalizers, palatal bars, etc.) or through removable additional force systems (orthodontic springs) which ensured the transfer of force from the skeletal anchorage to the teeth.

The combination of these additional connection systems to the removable devices, if on one side allows to improve the treatment biomechanics, on the other side, however, requires a greater collaboration of the patient (in case of the springs), by decreasing the treatment comfort and by making more difficult the oral hygiene manoeuvres (in case of fixed metal devices).

The recent developments of the digital technologies, such as the 3D printing, and of the new materials available on the market, such as the shape memory polymers, have fully modified the process for manufacturing the removable orthodontic devices, going from an analogic-manual manufacturing process to a wholly digital one.

Under shape memory polymer (Shape Memory Polymers or SMP) is meant a polymer which belongs to the class of the smart materials, and it is defined as a polymer "which has the ability to return from a deformed state (temporary shape) to the original one (permanent shape) through an external stimulus (activation)".

Currently, the conventional materials to produce the removable orthodontic devices are represented by stiff materials, such as the resins made of polymethylmethacrylate (PMMA), or sheets made of polyurethane or polyethylene glycol terephthalate (PETG), which are subjected to a process of manual manufacturing or thermoforming on dental models.

One of the problems detected among the removable orthodontic devices is surely the aesthetic impact of the device which, when it requires auxiliary elements, may create discomfort for the patient, especially if they are coloured elements, easily visible on the teeth.

An additional disadvantage detected in the current practice relates to the possibility of allergic reactions or hypersensitivity to metal components, such as for example fixed metal anchorages, which are also problematic in case of diagnostic tests with magnetic resonance, before which they should be removed and then repositioned.

Moreover, in order to allow a progressive and predictable repositioning of the teeth it is necessary to have to recourse to specific materials which allow to exert light and constant forces on the teeth, with a better predictability of the orthodontic movement.

At last, the removable orthodontic devices have to be easily positioned and removed, with connection mechanisms which minimize the deposition of food residues and allow the patient to remove and reposition the orthodontic device in a simple way.

The International patent application Nr. WO 2023/034160 A1 relates to a dental device which comprises a palatal portion and/or a lingual portion with one or more connection elements, each one thereof is shaped for mounting on a temporary anchorage system (TAD).

Some implementations of the orthodontic device do not provide auxiliary elements for anchorage. Indeed, one of the anchorage systems provide only miniscrews with a head having spherical shape (or even other shapes) which fit together with an aligner. The present document allows to produce aligners with polymeric materials usable in 3D printers, but it never refers to shape memory polymers and/or resins.

Moreover, the miniscrews are wholly implemented with metal components, well visible and aesthetically unpleasant for the user apart from being potential cause of hypersensitivity or allergies.

Another document which relates to removable aligners made of polymeric material is the European patent application Nr. EP 3,072,473 A1, which describes an orthodontic appliance comprising an aligner made of polymeric material and an extensor made of polymeric material, having a shape which can be coupled with the aligner, which applies a supporting load to the aligner to favour the movement of at least a tooth by the aligner.

Moreover, the appliance comprises a temporary anchorage device (TAD) which is installed in the bone structure of the patient and hooked to an opening of the extensor so that the TAD provides a mechanical anchorage for the extensor and the load applied by the aligner. Moreover, the proposed anchorage system comprises miniscrews arranged to lock the aligner and the extensor with fixing elements which can be screwed to the head of the miniscrews, by providing to have to remove the fixing elements before removing the aligner and the extensor, then to reposition them, presumably, on the heads of the miniscrews in order not to lose them, by repeating the procedure in reverse during the repositioning of the appliances.

Moreover, the document refers to polymeric materials to implement the aligners, but it does not mention more innovative materials such as the polymers and/or shape memory resins.

Disadvantageously, this type of orthodontic device makes its application and its removal very laborious, its management being difficult for the patient during oral hygiene and meals.

The patent application US2024016581A1 relates to a series of palatal expanders with variable width which are used to expand gradually the palate of a patient. Each palatal expander can have a palatal region flanked by toothed regions. The palatal region can have a plurality of anchoring interfaces which allow to connect the palatal expander to the temporary anchorages of the anchorage device which have been implanted in the patient's jaw.

Disadvantageously, the described invention may require implanting several times the anchorages, based upon the progression of palatal expansion. Moreover, the anchorages are not characterized in the description and in particular, nor for the anchorages, nor for the expanders reference is made to shape memory polymers. The technical problem underlying the present invention is to allow a removable orthodontic device and a related method for manufacturing said orthodontic device allowing to obviate the drawbacks mentioned with reference to the known art, wherein the orthodontic devices involve the impossibility to obtain complex orthodontic movements with removable orthodontic devices, they are aesthetically unpleasant and invasive, therefore the probability of allergic reactions by the patient due to the presence of metal anchorage devices increases.

US2016/278882 discloses a customized orthodontic appliance with tooth-fitting cavities and bonded extensions reinforcing aligners and enabling their attachment to auxiliary devices, thus allowing simultaneous use with sectional braces.

According to a first aspect of the present invention such problem is solved by a removable orthodontic device as defined in the enclosed claim 1.

The removable orthodontic device is suitable to obtain complex orthodontic movements, and it is produced with CAD-CAM techniques and 3D printing. Said orthodontic device comprises an orthodontic member, made from a shape memory polymer, which in turn comprises: a restraint portion of a dental arch, a connection portion apt to be in contact with a palatal surface and/or a lingual surface, and one or more female members positioned at said connection portion. Apart from the orthodontic member, the orthodontic device comprises one or more temporary anchorage devices (TADs), acting as orthodontic screw, comprising a shank, a hollow upper end and a protruding head which is attached to said upper end by a respecting connection screw.

It will be appreciated that the protruding head implements a male connection member and it is made from a shape memory polymer too.

The female members of said orthodontic member and the TADs have a shape so as to cooperate therebetween by implementing an automatic pressure connection, whereby a reversible connection mechanism is implemented.

The main advantage of the removable orthodontic device to obtain complex orthodontic movements according to the present invention lies in the fact of comprising a connection mechanism which is implemented, together with the orthodontic device, through 3D printing by using shape memory polymers, without the presence of ferromagnetic metals. Apart from guaranteeing better aesthetics, such mechanism results to be completely harmless in the patients allergic or hypersensitive to metal, or who are periodically subjected to magnetic resonance of the craniofacial district for particular needs or systemic diseases (autism, epilepsy or vascular problems), wherein the interference with metal would require the removal of the conventional orthodontic device.

Another advantage of the present invention lies in the fact of using shape memory polymers to implement said orthodontic device; in fact, the new shape memory polymers allow to exert light and constant forces on the teeth, with a better predictability of the orthodontic movement. Moreover, the elastic features of the shape memory polymers allow a stable and long-lasting insertion of female members on the protruding head of the TADs, with the capability of overcoming possible undercuts during insertion and removal without permanent deformation.

In fact, the recent shape memory polymers are a class of biocompatible materials capable of modifying their geometry based upon external conditions (such as heat), by recovering their original shape once the stimulus is suspended. The shape memory polymers are characterized by low density, high elastic deformation and great chemical stability. Thanks to their physical properties, the new shape memory polymers allow to exert light and constant forces on the teeth, with a better predictability of the orthodontic movement.

Their characteristic elasticity has made these polymers particularly suitable as a new material for the 3D printing of removable orthodontic devices (such as the direct shape memory aligners), by allowing to create the direct connections between these apparatuses and the miniscrews, as proposed in the present invention.

Moreover, the recent CAD-CAM software allows to draw the orthodontic devices in an individualized manner and to print them directly in 3D without the need for a physical model for the traditional thermoforming.

An additional advantage is the presence of the pressure connection which allows a stable anchorage of the orthodontic device to the TAD, by determining a treatment improvement from a biomechanical point of view, allowing to obtain complex tooth shifting and reducing the unwished tooth movements.

Moreover, the pressure connection guarantees to release the device and its removal during meals and the oral hygiene manoeuvres, with consequent improvement of the oral and periodontal health of the patient.

Under pressure connection a connection of a device is meant, formed by two elements, which are locked therebetween when they are superimposed and a pressure is exerted and which, on the contrary, are separated when a force is exerted to separate them.

The orthodontic device, the invention relates to, determines a greater compliance of the patient to the treatment, due to the use of a reduced number of orthodontic devices during therapy, and to a reduced time in chair and in the overall number of appointments, with considerably reduced study costs.

Preferably, said shape memory polymers are shape memory resins.

Preferably, said shape memory polymers are transparent.

Advantageously, the transparency of the shape memory polymers makes the orthodontic device barely visible and well tolerated by the patient from an aesthetical point of view.

According to a second aspect of the present invention the technical problem is solved by a method for manufacturing a removable orthodontic device as defined in the enclosed claim 8.

The method relates to the manufacturing of an orthodontic device, wherein one or more temporary anchorage devices (TADs) are provided, apt to be removably attached to a palatal surface and/or a lingual surface.

The TADs comprise a protruding head, implementing a male member, consisting of a hollow cylindrical body with an upper end and a lower end having a respective retentive rounded edge, with a diameter slightly larger than the cylindrical body having a cavity apt to receive a respective connection screw.

It will be appreciated that at least said protruding head is made from a shape memory polymer.

The method involves providing an orthodontic member digital model, by a CAD-CAM drawing software, shaped like a digital intraoral impression, of the type which can be obtained by intraoral scanner, and to implement an orthodontic member through 3D printing from said digital model.

The orthodontic member comprises a restraint portion of a dental arch and a connection portion apt to be placed in contact with a palatal surface and/or a lingual surface, said orthodontic member being made from a shape memory polymer and comprising one or more female members, formed integral with said orthodontic member, at said connection portion.

The orthodontic member is made in such a way that said one or more TADs are positioned to cooperate with each other, by implementing a pressure automatic connection, whereby a reversible connection mechanism is implemented, by inserting said one or more female members on their respective male members.

Advantageously, the manufacturing method has allowed to go from an analog-manual manufacturing process to a wholly digital one.

In fact, the digital workflow allows to implement these devices starting from a digital impression of the dental arches of the patient, by using CAD-CAM software and 3D printing, thereby removing several processing phases, which are specific to the traditional analog workflow.

Another advantage is linked to the accessibility of the production process, since the 3D printing of the shape memory polymers is based, preferably, on the additive production through the stereolithography (SLA) technology. The SLA printers can have reduced sizes, accessible costs and ease of use, making this technology more advantageous with respect to the manual manufacturing procedures of the devices or of the subtractive processes by milling.

The present invention will be described hereinafter according to a preferred embodiment example thereof, provided by way of example and not for limitative purposes with reference to the enclosed drawings wherein:
* figure 1 shows a perspective view of a removable orthodontic device according to the invention, in digital format, superimposed to an intraoral digital impression;

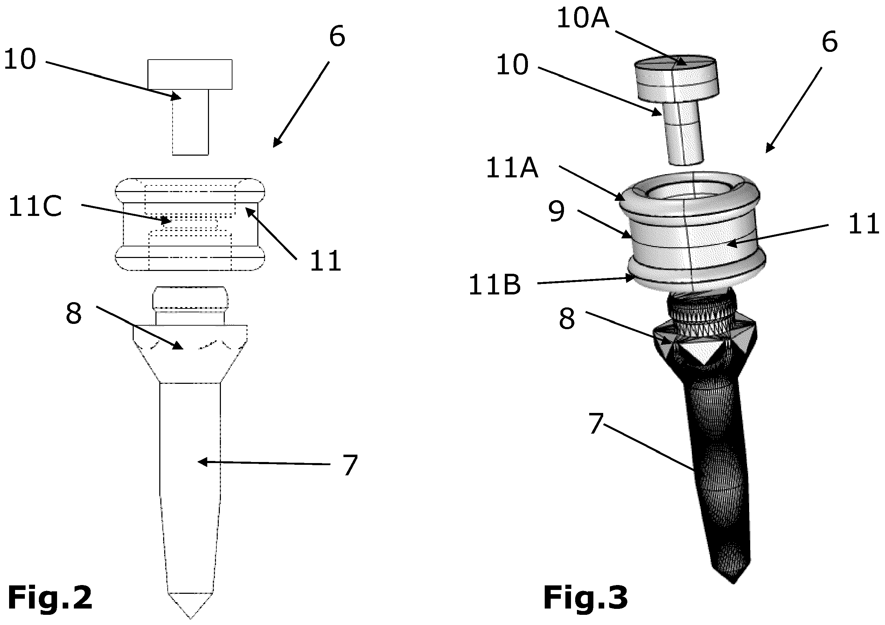

* figure 2 shows a lateral and exploded view of a temporary anchorage device, acting as orthodontic screw, according to the invention;
* figure 3 shows an exploded perspective view of figure 2 of a temporary anchorage device, acting as orthodontic screw, according to the invention;

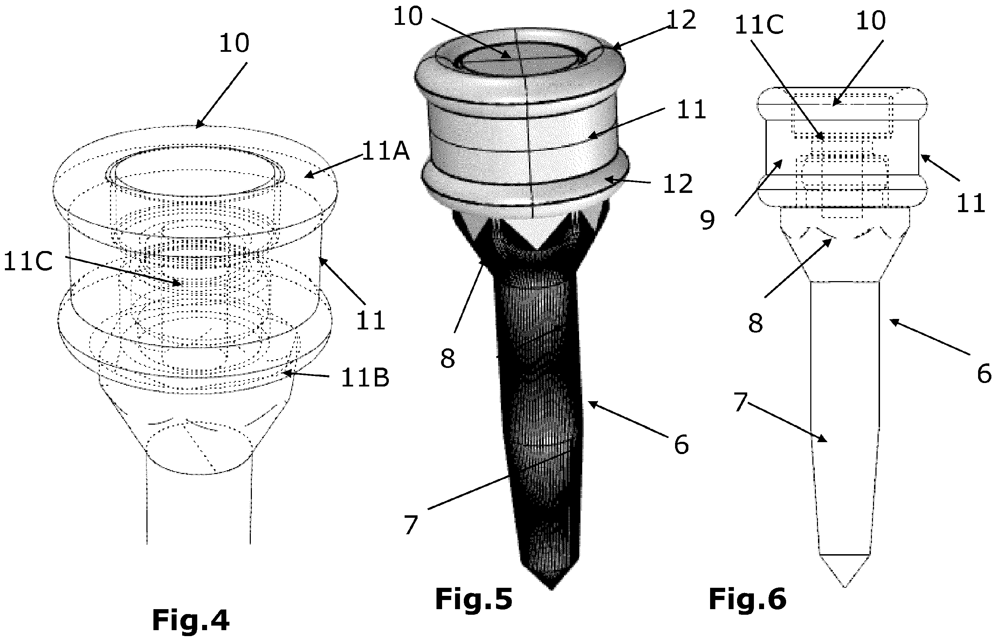

* figure 4 shows a top perspective view of a detail of said temporary anchorage device;
* figure 5 shows a top perspective view of said temporary anchorage device;
* figure 6 shows a side view of said temporary anchorage device with a transparent head to allow viewing a connection screw according to the invention;

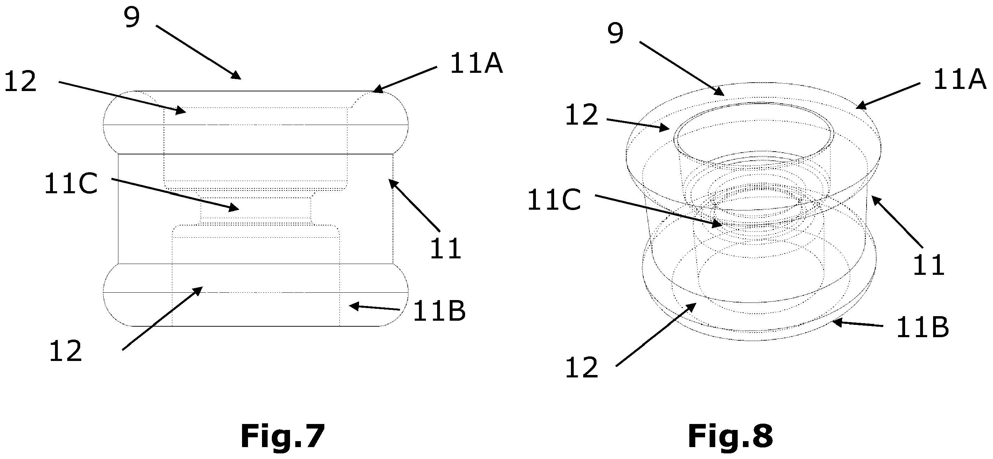

* figure 7 shows a side view of said transparent head according to figure 6;
* figure 8 shows a perspective view of said figure 7;

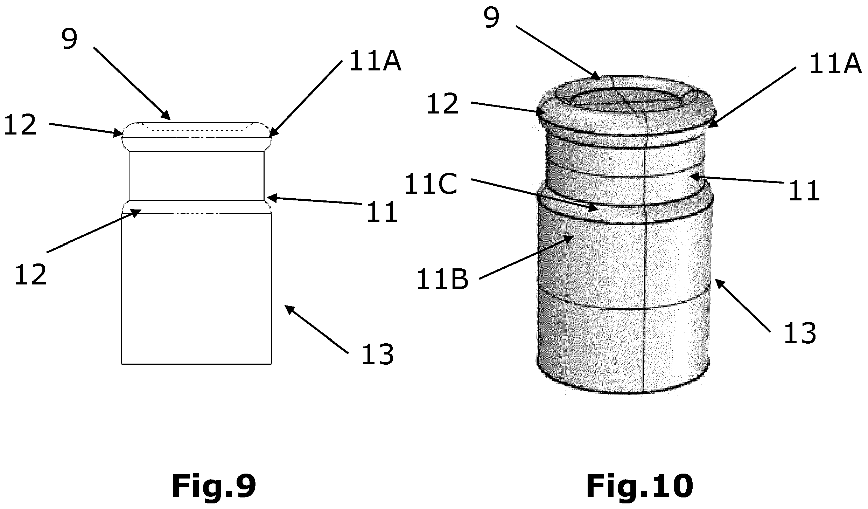

* figure 9 shows a side view of a transparent digital reproduction of a digital male member according to the invention;
* figure 10 shows a perspective view of a digital reproduction of a digital male member according to the invention;

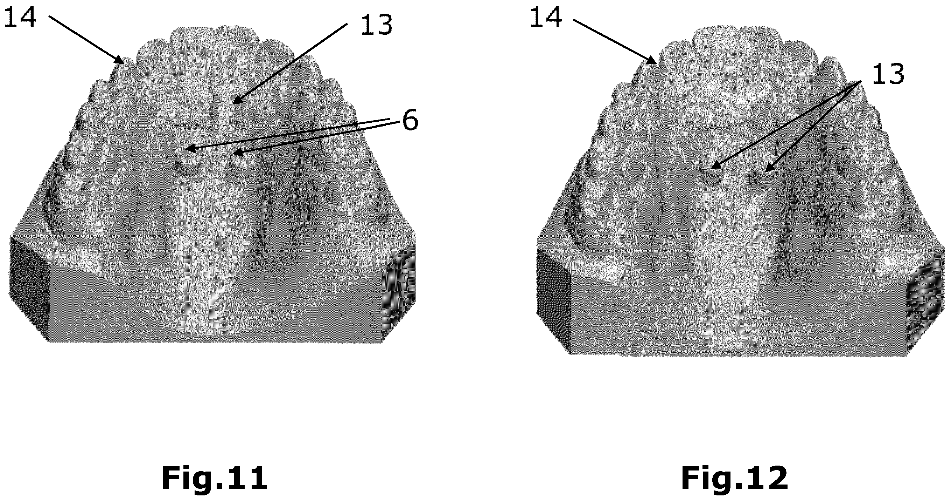

* figure 11 shows a perspective view of an intraoral digital impression thereto a digital male member is superimposed according to figure 10;
* figure 12 shows figure 11 with two digital male members position on two TADs according to the invention; and
* figure 13 shows a three-dimensional side view of a female member, in continuity with an orthodontic member according to the invention, connected by pressure with a male member.

With reference to the figures, a removable orthodontic device is designated as a whole with 1.

The removable orthodontic device 1 according to the invention is suitable to obtain complex orthodontic movements and it is made with CAD-CAM techniques and 3D printing.

Preferably, the 3D printing is performed through stereolithography (SLA) technology.

The orthodontic device 1 comprises an orthodontic member 2 made from a shape memory polymer including a restraint portion 3 of a dental arch and a connection portion 4 apt to be in contact with a palatal surface and/or a lingual surface. Said orthodontic member 2 further includes one or more female members 5 positioned at said connection portion 4.

The orthodontic device 1, moreover, comprises one or more temporary anchorage devices (TADs) 6, acting as orthodontic screw 6, comprising a shank 7, a hollow upper end 8 and a protruding head 9 anchored to said upper end 8 through a respective connection screw 10. Said protruding head 9 implements a male connection member 9 and it is made from a shape memory polymer too.

The female members 5 of the orthodontic member 2 and said one or more TADs 6 being shaped as to cooperate with each other by implementing a pressure connection, whereby a reversible connection mechanism is implemented.

Preferably, said shank 7 comprises a thread, as well as said connection screw 10.

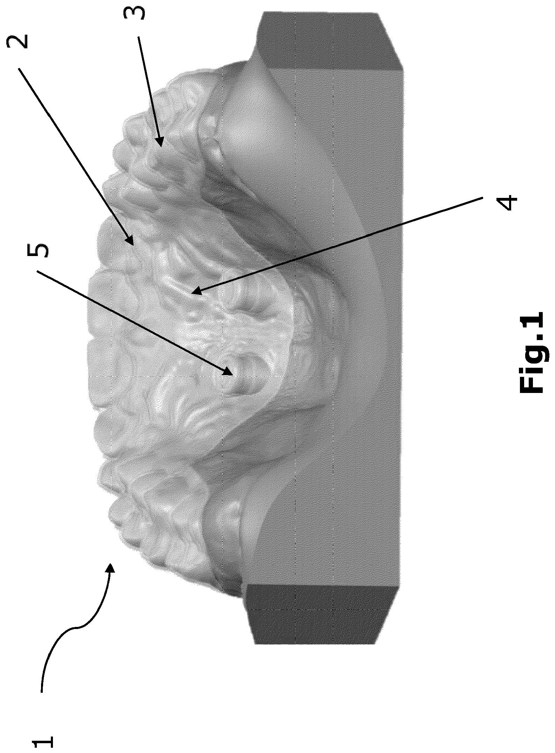

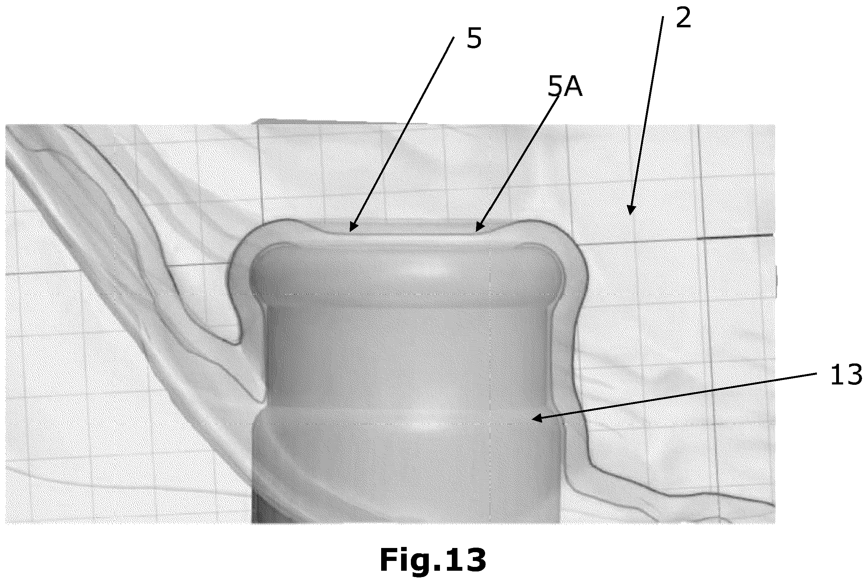

According to the embodiments shown in figures 1 and 13 said shape memory polymers are transparent.

The transparency of the orthodontic member 2 allows to obtain a better aesthetic result, by making the orthodontic device barely visible and better tolerated by the patient.

Preferably, the protruding head 9 comprises a hollow cylindrical body 11 with a cavity, an upper end 11A and a lower end 11B both having a retentive rounded edge 12 with a diameter slightly larger than that of the cylindrical body 11, the cavity of said cylinder being shaped to receive inside thereof said connection screw 10.

Moreover, the connection screw 10 can have a respective fastening head 10A and the cylindrical body 11 can comprise a narrowing 11C of its cavity, so as to provide a stop for the fastening head 10A, by placing it inside the respective protruding head 9.

In this way the protruding head 9 of each TAD 6 can have a substantially smooth upper surface, by avoiding the deposit of food due to protuberances and discontinuity.

Moreover, since said protruding head 9 is made of shape memory polymers and since it winds the connection screw 10, it reduces the contact between the metal portions of the orthodontic device 1 with the oral cavity, thus reducing the risk of allergies or hypersensitivity.

According to some preferred embodiments of the invention, the female member 5 has a shape so as to cooperate with a respective male member 9 and which, being made integral with said orthodontic member, has a closed top end 5A.

Preferably, the diameter of said cylindrical body 11 is in a range between 3 mm and 6 mm, more preferably is 4.5 mm.

Preferably, the diameter of said rounded edges 12 is in a range between 4 mm and 7 mm, more preferably is 5 mm.

Preferably, the diameter of said narrowing 11C is in a range between 1.5 mm and 2.5 mm, more preferably 1.8 mm.

Preferably, the height of said head 9 is in a range between 3 mm and 5 mm, more preferably 3.5 mm.

Preferably, said shape memory polymers are shape memory resins.

Said shape memory polymers can be selected in the group consisting of: polyacrylate copolymers, polynorbornene, segmented polyurethanes, segmented polyurethane ionomers, epoxy-based polymers, thiolene-based polymers, cross-linked polycyclooctene, cross-linked ethylene-vinyl acetate copolymer and styrene-based polymers and/or combinations thereof.

To be able to apply said orthodontic device 2 one or more temporary anchorage devices (TADs) 6 can be arranged, as illustrated above in the different embodiments, at a palatal surface and/or a lingual surface, in particular, wherein at least said protruding head 9 implementing said male member 9 is made from a shape memory polymer. Once said TADs 6 are implanted, a digital intraoral impression 14 of the dental arches of the patient can be performed through an intraoral scanner by recording, preferably, even one or more male members 9.

Once these preliminary steps are performed, in order to produce said removable orthodontic device 1 with pressure connection mechanism, a manufacturing method comprises providing an orthodontic member digital model 1, preferably implemented by using a CAD-CAM drawing software, based on the detected digital dental impression 14.

According to some embodiments, the method comprises to provide an orthodontic member digital model obtained through a CAD-CAM drawing software, the orthodontic member being shaped as a digital intraoral impression, of the type obtainable by an intraoral scanner, wherein said CAD-CAM software allows to customize the orthodontic member to promote the movement of one or more teeth when said orthodontic member is in use.

At last, the method provides to produce said orthodontic member 2 through 3D printing from said digital model, said orthodontic member 2 comprising a restraint portion 3 of a dental arch and a connection portion 4 apt to be placed in contact with a palatal surface and/or a lingual surface, said orthodontic member 2 being made from a shape memory polymer and comprising one or more female members 5, formed integral with said orthodontic member 2, at said connection portion 4, so that said orthodontic member 2 and said one or more TADs 6 are positioned to cooperate with each other by implementing an automatic pressure connection, whereby a reversible connection mechanism is implemented, by inserting said one or more female members 5 on their respective male members 9.

If the intraoral digital impression 14 fails to detect the male members 9, the manufacturing method can provide to produce through a CAD-CAM drawing software, one or more digital male members 13 corresponding to said real male members 9 and virtually arranging with the software the digital male member 13 at the position of said one or more TADs 6.

Then, the method may provide to superimpose virtually, through said software, said digital intraoral impression 14 to said one or more digital male members 13 and at last, to produce said orthodontic member 2 through 3D printing by using a shape memory polymer, wherein said orthodontic member 2 includes one or more female members 5 formed as a single one on said orthodontic member 2, so that said orthodontic member 2 and said one or more TADs 6 can be connected by pressure, inserting said one or more male members 9 on their respective female members 5.

Therefore, said method allows to remove several working phases of the currently used manual techniques, by saving costs and time to the patient and by making the dentist's work more reproducible and controllable.

To the above-described removable orthodontic device and to the related manufacturing method, with the purpose of satisfying additional and contingent needs, the person skilled in the art could introduce several additional modifications and variants, however all comprised within the protective scope of the present invention, as defined by the enclosed claims.

## Claims

1. A removable orthodontic device (1), suitable to obtain complex orthodontic movements and made with CAD-CAM techniques and 3D printing, comprising:
* an orthodontic member (2), made from a shape memory polymer, which in turn comprises:
∘ a restraint portion (3) of a dental arch;
∘ a connection portion (4) which is apt to be in contact with a palatal surface and/or a lingual surface; and
∘ one or more female members (5) positioned at said connection portion (4);
* one or more temporary anchorage devices (TADs) (6), acting as orthodontic screw, comprising a shank (7), a hollow upper end (8) and a protruding head (9) which is attached to said upper end (8) by a respecting connection screw (10), said head (9) implementing a male connection member (9) and being made from a shape memory polymer as well;
* said female members (5) of said orthodontic member (2) and said one or more TADs (6) being shaped as to cooperate with each other by implementing an automatic pressure connection, whereby a reversible connection mechanism is implemented.

2. The orthodontic device (1) according to claim 1, wherein said shape memory polymer is transparent.

3. The orthodontic device (1) according to claim 1 or 2, wherein said protruding head (9) comprises a hollow cylindrical body (11) with a cavity, an upper end (11A) and a lower end (11B) both having a retentive rounded edge (12) with a diameter slightly larger than the cylindrical body (11), the cavity of said cylinder (11) being shaped to receive inside thereof said connection screw (10).

4. The orthodontic device (1) according to claim 3, wherein said connection screw (10) has a respective fastening head (10A), and wherein said cavity has a narrowing (11C) so as to provide a stop for the fastening head (10A), by placing it inside the respective protruding head (9).

5. The orthodontic device (1) according to any one of the preceding claims, wherein each female member (5) is made integral with the orthodontic member (2) and it has a closed top end (5A) shaped to cooperate with a respective male member (9).

6. The orthodontic device (1) according to claim 4 wherein the diameter of each cylindrical body (11) is in a range between 3 mm and 6 mm, preferably it is 4.5 mm, the maximum diameter of said rounded edges (12) is in a range between 4 mm and 7 mm, preferably it is 5 mm, the diameter of said narrowing (11C) is in a range between 1.5 mm and 2.5 mm, preferably 1.8 mm, the height of said protruding head (9) is in a range between 3 mm and 5 mm, preferably 3.5 mm.

7. The orthodontic device (1) according to any one of the preceding claims, wherein said shape memory polymer is selected in a group consisting of: polyacrylate copolymers, polynorbornene, segmented polyurethanes, segmented polyurethane ionomers, epoxy-based polymers, thiolene-based polymers, cross-linked polycyclooctene, cross-linked ethylene-vinyl acetate copolymer and styrene-based polymers and/or combinations thereof.

8. A method for manufacturing an orthodontic device (1), wherein one or more temporary anchorage devices (TADs) (6) are provided, apt to be removably attached to a palatal surface and/or a lingual surface, comprising a protruding head (9), implementing a male member, consisting of a hollow cylindrical body (11) with an upper end (11A) and a lower end (11B) having a respective retentive rounded edge (12), with a diameter slightly larger than that of the cylindrical body (11), said cylindrical body (11) having a cavity apt to receive a respective connection screw (10), at least said protruding head (9) being made from a shape memory polymer and the method including the steps of:
* providing an orthodontic member digital model; and
* producing an orthodontic member (2) through 3D printing from said digital model, said orthodontic member (2) comprising a restraint portion (3) of a dental arch and a connection portion (4) apt to be placed in contact with a palatal surface and/or a lingual surface, said orthodontic member (2) being made from a shape memory polymer and comprising one or more female members (5), formed integral with said orthodontic member (2), at said connection portion (4),
so that said orthodontic member (2) and said one or more TADs (6) are position to cooperate with each other implementing an automatic pressure connection, whereby a reversible connection mechanism is implemented, by inserting said one or more female members (5) on their respective male members (9).

9. The method according to claim 8, comprising the steps of:
• generating, through a CAD-CAM drawing software, one or more digital male members (13) corresponding to respective real male members (9); and
• virtually placing said one or more digital male members (13) at said one or more TADs (6) position in said orthodontic member digital model.

10. The method according to claim 8 or 9, wherein said 3D printing is carried out through stereolithography (SLA) technology.

## Patentansprüche

1. Herausnehmbar kieferorthopädische Vorrichtung (1), die zur Erzielung komplexer kieferorthopädischer Bewegungen geeignet ist und mittels CAD-CAM-Techniken und 3D-Druck hergestellt wird, aufweisend:
* Ein kieferorthopädisches Element (2) aus einem Formgedächtnispolymer, das seinerseits aufweist:
∘ einen Halteabschnitt (3) von einen Zahnbogen;
∘ einen Verbindungsabschnitt (4), der dazu geeignet ist, mit einer palatinalen Fläche und/oder einer lingualen Fläche in Kontakt zu stehen; und
∘ ein oder mehrere Aufnahmeteile (5), die an dem Verbindungsabschnitt (4) angeordnet sind;
* ein oder mehrere temporäre Verankerungsvorrichtungen (TADs) (6), die als kieferorthopädische Schrauben fungieren und einen Schaft (7), ein hohles oberes Ende (8) und einen vorstehenden Kopf (9) aufweisen, der an dem oberen Ende (8) mittels einer entsprechenden Verbindungsschraube (10) befestigt ist, wobei der Kopf (9) ein männliches Verbindungselement (9) implementiert und ebenfalls aus einem Formgedächtnispolymer besteht;
* wobei die Aufnahmeteile (5) des kieferorthopädischen Elements (2) und die eine oder mehreren TADs (6) so geformt sind, dass sie durch die herstellen einer automatischen Druckverbindung miteinander zusammenwirken, wodurch ein reversibler Verbindungsmechanismus implementiert wird.

2. Kieferorthopädische Vorrichtung (1) nach Anspruch 1, wobei das Formgedächtnispolymer transparent ist.

3. Kieferorthopädische Vorrichtung (1) nach Anspruch 1 oder 2, wobei der vorstehende Kopf (9) einen hohlzylindrischen Körper (11) mit einem Hohlraum, ein oberes Ende (11A) und ein unteres Ende (11B) aufweist, die beide eine haltende abgerundete Kante (12) mit einem Durchmesser aufweisen, der geringfügig größer ist als der des zylindrischen Körpers (11), wobei der Hohlraum des Zylinders (11) so geformt ist, dass er die Verbindungsschraube (10) in seinem Inneren aufnehmen kann.

4. Kieferorthopädische Vorrichtung (1) nach Anspruch 3, wobei die Verbindungsschraube (10) einen entsprechenden Befestigungskopf (10A) aufweist und wobei der Hohlraum eine Verengung (11C) aufweist, um einen Anschlag für den Befestigungskopf (10A) zu bilden, indem dieser in den entsprechenden vorstehenden Kopf (9) eingesetzt wird.

5. Kieferorthopädische Vorrichtung (1) nach einem der vorstehenden Ansprüche, wobei jedes Aufnahmeteil (5) einstückig mit dem kieferorthopädischen Element (2) ausgebildet ist und ein geschlossenes oberes Ende (5A) aufweist, das so geformt ist, dass es mit einem entsprechenden männlichen Element (9) zusammenwirkt.

6. Kieferorthopädische Vorrichtung (1) nach Anspruch 4, wobei der Durchmesser jedes zylindrischen Körpers (11) in einem Bereich zwischen 3 mm und 6 mm liegt, vorzugsweise 4,5 mm beträgt, der maximale Durchmesser der abgerundeten Kanten (12) in einem Bereich zwischen 4 mm und 7 mm liegt, vorzugsweise 5 mm beträgt, der Durchmesser der Verengung (11C) in einem Bereich zwischen 1,5 mm und 2,5 mm liegt, vorzugsweise 1,8 mm ist, die Höhe des vorstehenden Kopfes (9) in einem Bereich zwischen 3 mm und 5 mm liegt, vorzugsweise 3,5 mm ist.

7. Kieferorthopädische Vorrichtung (1) nach einem der vorstehenden Ansprüche, wobei das Formgedächtnispolymer aus einer Gruppe ausgewählt ist, bestehend aus: Polyacrylat-Copolymeren, Polynorbornen, segmentierte Polyurethane, segmentierte Polyurethan-Ionomere, Polymere auf Epoxidbasis, Polymere auf Thiolenbasis, vernetztes Polycycloocten, vernetztes EthylenVinylacetat-Copolymer und Polymere auf Styrolbasis und/oder Kombinationen davon.

8. Verfahren zur Herstellung einer kieferorthopädischen Vorrichtung (1), wobei eine oder mehrere temporäre Verankerungsvorrichtungen (TADs) (6) bereitgestellt sind, die lösbar an einer palatinale Fläche und/oder einer linguale Fläche befestigbar sind, aufweisend einen vorstehenden Kopf (9), der ein männliches Element implementiert, das aus einem hohlen zylindrischen Körper (11) mit einem oberen Ende (11A) und einem unteren Ende (11B) besteht, das jeweils eine haltende, abgerundete Kante (12) aufweist, deren Durchmesser geringfügig größer ist als der des zylindrischen Körpers (11), wobei der zylindrische Körper (11) einen Hohlraum aufweist, der zur Aufnahme einer entsprechenden Verbindungsschraube (10) geeignet ist, wobei zumindest der vorstehende Kopf (9) aus einem Formgedächtnispolymer hergestellt ist und das Verfahren die folgenden Schritte umfasst:
* Bereitstellen eines digitalen Modells eines kieferorthopädischen Elements; und
* Herstellen eines kieferorthopädischen Elements (2) durch 3D-Druck ausgehend von dem digitalen Modell, wobei das kieferorthopädische Element (2) einen Halteabschnitt (3) von einem Zahnbogen und einen Verbindungsabschnitt (4) aufweist, der dazu geeignet ist, mit einer Gaumenfläche und/oder einer Zungenfläche in Kontakt gebracht zu werden, wobei das kieferorthopädische Element (2) aus einem Formgedächtnispolymer hergestellt ist und ein oder mehrere Aufnahmeteile (5) aufweist, die an dem Verbindungsabschnitt (4) einstückig mit dem kieferorthopädischen Element (2) ausgebildet sind,
so dass das kieferorthopädische Element (2) und das eine oder die mehreren TADs (6) so positioniert sind, dass sie miteinander zusammenwirken und eine automatische Druckverbindung herstellen, wodurch ein reversibler Verbindungsmechanismus implementiert wird, indem das eine oder die mehreren Aufnahmeteile (5) auf ihre jeweiligen männlichen Elemente (9) aufgesetzt werden.

9. Verfahren nach Anspruch 8, aufweisend die Schritte:
• Erzeugen eines oder mehrerer digitaler männlicher Elemente (13), die den jeweiligen realen männlichen Elementen (9) entsprechen, mittels einer CAD-CAM-Zeichensoftware; und
• virtuelles Platzieren des einen oder der mehreren digitalen männlichen Elemente (13) an der Position des einen oder der mehreren TADs (6) in dem digitalen Modell des kieferorthopädischen Elements.

10. Verfahren nach Anspruch 8 oder 9, wobei der 3D-Druck mittels Stereolithografie (SLA)-Technologie durchgeführt wird.

## Revendications

1. Dispositif orthodontique amovible (1), adapté à l'obtention de mouvements orthodontiques complexes et fabriqué à l'aide de techniques CAD-CAM et d'impression 3D, comprenant :
* un élément orthodontique (2), fabriqué à partir d'un polymère à mémoire de forme, qui comprend à son tour :
∘ une partie de retenue (3) d'une arcade dentaire ;
∘ une partie de connexion (4) apte à être en contact avec une surface palatine et/ou une surface linguale ; et
∘ un ou plusieurs éléments femelles (5) positionnés au ladite partie de connexion (4) ;
* un ou plusieurs dispositifs d'ancrage temporaire (DAT) (6), agissant comme vis orthodontique, comprenant une tige (7), une extrémité supérieure creuse (8) et une tête saillante (9) qui est fixée à ladite extrémité supérieure (8) par une vis de connexion (10) respective, ladite tête (9) mettant en œuvre un élément de connexion mâle (9) et étant également fabriquée à partir d'un polymère à mémoire de forme ;
* lesdits éléments femelles (5) dudit élément orthodontique (2) et lesdits un ou plusieurs DAT (6) étant façonnés de manière à coopérer l'un avec l'autre en mettant en œuvre une connexion automatique par pression, ce qui permet de mettre en œuvre un mécanisme de connexion réversible.

2. Dispositif orthodontique (1) selon la revendication 1, dans lequel ledit polymère à mémoire de forme est transparent.

3. Dispositif orthodontique (1) selon la revendication 1 ou 2, dans lequel ladite tête saillante (9) comprend un corps cylindrique creux (11) avec une cavité, une extrémité supérieure (11A) et une extrémité inférieure (11B) ayant toutes deux un bord arrondi rétentif (12) avec un diamètre légèrement plus grand que le corps cylindrique (11), la cavité dudit cylindre (11) étant façonnée pour recevoir à l'intérieur de celui-ci ladite vis de connexion (10).

4. Dispositif orthodontique (1) selon la revendication 3, dans lequel ladite vis de connexion (10) a une tête de fixation (10A) respective, et dans lequel ladite cavité a un rétrécissement (11C) de manière à fournir une butée pour la tête de fixation (10A), en la plaçant à l'intérieur de la tête saillante (9) respective.

5. Dispositif orthodontique (1) selon l'une quelconque des revendications précédentes, dans lequel chaque élément femelle (5) est formé d'un seul tenant avec l'élément orthodontique (2) et présente une extrémité supérieure fermée (5A) façonnée pour coopérer avec un élément mâle (9) respectif.

6. Dispositif orthodontique (1) selon la revendication 4, dans lequel le diamètre de chaque corps cylindrique (11) est compris entre 3 mm et 6 mm, de préférence 4,5 mm, le diamètre maximal desdits bords arrondis (12) est compris entre 4 mm et 7 mm, de préférence 5 mm, le diamètre dudit rétrécissement (11C) est compris entre 1,5 mm et 2,5 mm, de préférence 1,8 mm, la hauteur de ladite tête saillante (9) est comprise entre 3 mm et 5 mm, de préférence 3,5 mm.

7. Dispositif orthodontique (1) selon l'une quelconque des revendications précédentes, dans lequel ledit polymère à mémoire de forme est choisi dans un groupe constitué de : copolymères de polyacrylate, polynorbornène, polyuréthanes segmentés, ionomères de polyuréthane segmentés, polymères à base d'époxy, polymères à base de thiolène, polycyclooctène réticulé, copolymère d'éthylène-acétate de vinyle réticulé et polymères à base de styrène et/ou des combinaisons de ceux-ci.

8. Procédé de fabrication d'un dispositif orthodontique (1), dans lequel un ou plusieurs dispositifs d'ancrage temporaire (DAT) (6) sont fournis, aptes à être fixés de manière amovible à une surface palatine et/ou à une surface linguale, comprenant une tête saillante (9), mettant en œuvre un élément mâle, consistant en un corps cylindrique creux (11) avec une extrémité supérieure (11A) et une extrémité inférieure (11B) ayant un bord arrondi rétentif (12) respectif, avec un diamètre légèrement supérieur à celui du corps cylindrique (11), ledit corps cylindrique (11) ayant une cavité apte à recevoir une vis de connexion (10) respective, au moins ladite tête saillante (9) étant fabriquée à partir d'un polymère à mémoire de forme et le procédé comprenant les étapes consistant à :
* fournir un modèle numérique d'élément orthodontique ; et
* produire un élément orthodontique (2) par impression 3D à partir dudit modèle numérique, ledit élément orthodontique (2) comprenant une partie de retenue (3) d'une arcade dentaire et une partie de connexion (4) apte à être placée en contact avec une surface palatine et/ou une surface linguale, ledit élément orthodontique (2) étant fabriqué à partir d'un polymère à mémoire de forme et comprenant un ou plusieurs éléments femelles (5), formés d'un seul tenant avec ledit élément orthodontique (2), au niveau de ladite partie de connexion (4),
de sorte que ledit élément orthodontique (2) et lesdits un ou plusieurs DAT (6) sont positionnés de manière à coopérer l'un avec l'autre en mettant en œuvre une connexion automatique par pression, un mécanisme de connexion réversible étant mis en œuvre, en insérant lesdits un ou plusieurs éléments femelles (5) sur leurs éléments mâles (9) respectifs.

9. Procédé selon la revendication 8, comprenant les étapes consistant à :
• générer, à l'aide d'un logiciel de dessin CAD-CAM, lesdits un ou plusieurs éléments mâles numériques (13) correspondant aux éléments mâles réels (9) respectifs ; et
• placer virtuellement ledit ou plusieurs éléments mâles numériques (13) à la position desdits un ou plusieurs DAT (6) dans ledit modèle numérique d'élément orthodontique.

10. Procédé selon la revendication 8 ou 9, dans lequel ladite impression 3D est réalisée par technologie de stéréolithographie (SLA).
